# EUROPÄISCHE PATENTSCHRIFT

(11) **EP 2 976 284 B1**
(45) Veröffentlichungstag und Bekanntmachung des Hinweises auf die Patenterteilung: **16.04.2025**
(21) Anmeldenummer: 14702476.4
(22) Anmeldetag: 22.01.2014
(51) Int. Cl.: B66C 13/16, E02F 9/26, G01C 15/02

(54) **MOBILES BAUSTELLENVERMESSUNGSGERÄT**
MOBILE CONSTRUCTION SITE SURVEYING DEVICE
APPAREIL DE MESURE DE CHANTIER MOBILE

(30) Priorität: 22.03.2013 DE 102013005182; 11.04.2013 DE 102013206471
(43) Veröffentlichungstag der Anmeldung: 27.01.2016
(73) Patentinhaber: MTS Schrode AG, 72534 Hayingen (DE)
(72) Erfinder: SCHRODE, Rainer, 88529 Zwiefalten (DE); NOHLEN, Ulrike, 72531 Hohenstein (DE)
(74) Vertreter: DREISS Patentanwälte PartG mbB
(86) Internationale Anmeldenummer: PCT/EP2014/051173
(87) Internationale Veröffentlichungsnummer: WO 2014/146809

(56) Entgegenhaltungen:
- WO-A1-2012/088413
- WO-A1-2014/013910
- WO-A2-2010/039233
- JP-A- 2000 344 005
- US-A- 5 173 710
- US-A1- 2003 065 570
- US-A1- 2006 173 600
- US-A1- 2011 178 677
- US-A1- 2012 288 328

## Beschreibung

Die Erfindung betrifft ein mobiles Baustellenvermessungsgerät gemäß dem Oberbegriff des Anspruchs 1.

Unter dem Begriff Baustellenvermessungsgerät ist ein Gerät zum Einsatz bei Aufnahme- sowie Absteckarbeiten auf Baustellen zu verstehen. Die Aufgabe der Baustellenvermessung fällt bei Großbaustellen normalerweise einem Geodäten oder Vermessungstechniker zu, bei kleineren Baustellen einem Bauingenieur oder Bauleiter. Die Baustellenvermessung umfasst im Regelfall mehrere Arbeitsabläufe: das Kalibrieren einer Empfangseinrichtung eines Positionserfassungssystems des mobilen Baustellenvermessungsgeräts, das Abstecken der Baustelle sowie das Aufnehmen der Baustelle.

Unter dem Begriff des Absteckens versteht man generell das Übertragen von Punkten aus geographischen Baustelleninformationen, üblicherweise aus einem Bauplan, in die reale Welt. Hierzu gehört beispielsweise das Übertragen und Markieren von wichtigen Linien, wie beispielsweise Bauwerkspunkten, Baufluchtlinien, Höhen eines Höhenbezugs, die Festlegung eines Höhenniveaus eines Fundaments eines zu errichtenden Bauwerks, eine Lagen- und Höhen-Absteckung anderer Bauelemente wie beispielsweise eines Kanals, einer Rohrleitung, einer elektrischen Leitung, sowie das Markieren wichtiger Bauwerksecken beispielsweise mittels eines Schnurgerüsts. Üblich ist hier auch die Verwendung von Sprühfarbe sowie die Markierung im Gelände mittels Messmarkierungen, Nägeln oder Pflöcken.

Unter dem Begriff des Aufnehmens versteht man generell das Übertragen von Punkten aus der realen Welt in eine geographische Baustelleninformation, üblicherweise in den Bauplan, beispielsweise im Rahmen von ein Bauvorhaben vorbereitenden, abschließenden oder begleitenden Vermessungsarbeiten. Diese umfassen beispielsweise die Kontrolle von Höhenlagen und Gebäudeecken, das Vermessen zur begleitenden Baukontrolle, das Aufnehmen einer Einfriedung sowie eine Endvermessung. Aber auch das Korrigieren von Fehlern in dem Bauplan fällt hierunter, beispielsweise wenn ein Verlauf einer unterirdischen Leitung sich als im Bauplan falsch eingetragen herausstellt.

Ein Problem dieser mobilen Baustellungsvermessungsgeräte ist hierbei, dass ihr Einsatzbereich auf solche Vermessungen bzw. Absteckarbeiten, die mit einem sogenannten Rover durchgeführt werden, limitiert ist. Bei einem Rover handelt es sich um ein mobiles - also von einer Person im Betrieb manuell bewegbares - Gerät für Vermessungsarbeiten. Meist handelt es sich um einen mobilen Vermessungsstab, an dem das insoweit "mobile" Baustellenvermessungsgerät montiert ist, und der für Vermessungsarbeiten genutzt wird. Für andere Einsatzbereiche werden daher separate Geräte verwendet. Beispielsweise kommt in einem Bagger ein im Betrieb dort stationär und insoweit im Betrieb nicht mobiles Gerät zum Einsatz, was mit Zusatzkosten verbunden ist. Ferner hat jedes Gerät meist ein gerätespezifisches Format zur Speicherung der geographischen Baustelleninformationen. Daher sind zusätzliche Umwandlungsmodule erforderlich, was wiederum zusätzliche Kosten verursacht.

Die WO 2014/013910 A1 bzw. EP 2 876 220 A1 offenbaren einen Bagger mit einem dort befestigbaren multifunktionalen tragbaren Informationsterminal, der als Eingabe- und Anzeigegerät des Baggers genutzt werden kann. Der multifunktionale tragbare Informationsterminal kann über eine GPS-Funktion und über eine Kartendarstellungsfunktion verfügen.

Die US 2003/0065570 A1 beschreibt ein System, mit dem eine Baumaschine mit Kraftstoff versorgt werden kann. Dabei wird der aktuelle Füllstand beispielsweise über ein Mobiltelefon in ein Netzwerk eingespeist, ebenso die mittels eines GPS ermittelte Position der Baumaschine, und auch die Position eines Tankwagens wird mittels GPS erfasst. Auf diese Weise kann der Tankwagen rechtzeitig zu der Baumaschine geleitet werden.

Die US 2012/0288328 A1 beschreibt eine Steuerung einer Maschine zur Herstellung eines Straßenbelag. Hierzu wird die Position der Maschine erfasst, und es wird eine Karte erstellt mit Daten, wann was bearbeitet wurde. Dies kann grafisch dargestellt werden. Ein Tablett-PC mit einer Anzeige und einer Eingabe dient zum Eingeben und Anzeigen von Betriebsparametern der Maschine.

Die US 2011/0178677 A1 beschreibt die Möglichkeit, ein iPhone für die Steuerung eines Packers zu verwenden. Die WO 2012/088413 A1 beschreibt die Möglichkeit der Verwendung eines Smartphones an einem Rover.

Aufgabe der vorliegenden Erfindung ist es zunächst, ein möglichst flexibel und universell einsetzbares mobiles Baustellenvermessungsgerät zu schaffen.

Diese Aufgabe wird durch ein mobiles Baustellenvermessungsgerät mit den Merkmalen des Anspruchs 1 gelöst. Weiterbildungen der Erfindung sind in den Unteransprüchen angegeben. Außerdem finden sich für die Erfindung wichtige Merkmale in der nachfolgenden Beschreibung und in den Zeichnungen, wobei diese Merkmale sowohl in Alleinstellung als auch in Kombination erfindungswesentlich sein können.

Die Möglichkeit des Zuführens von Signalen einer baumaschinenseitigen Einrichtung über eine Schnittstelle erweitert den Einsatzbereich des mobilen Baustellenvermessungsgeräts erheblich. Es kann nun nämlich nicht nur im mobilen Betrieb als Rover sondern zusätzlich auch stationär in einer Baumaschine unter Berücksichtigung aktueller Parameter einer baumaschinenseitigen Einrichtung eingesetzt werden. Die übertragenen Informationen können dann beispielsweise zur Baumaschinenführung und/oder mit Informationen und Daten, beispielsweise mit Soll-Werten für Positionen oder ähnlichem, die auf dem Baustellenvermessungsgerät abgespeichert sind, abgeglichen werden. Hierdurch werden höhere Grade an Automatisierung und damit Wirtschaftlichkeit in den Bauunternehmungen ermöglicht. Als Baumaschine kommt insbesondere ein Bagger in Frage, aber auch ein Erdhobel oder Straßenhobel oder auch eine Planierwalze.

Für den mobilen Betrieb als Rover und den stationären Betrieb in einer Baumaschine kann somit ein und dasselbe Gerät verwendet werden. Oder, einfach ausgedrückt: Das erfindungsgemäße Baustellenvermessungsgerät erfüllt eine Doppelfunktion: es kann sowohl als stationäres Navigationsgerät in der Baumaschine als auch als mobiles Rovergerät eingesetzt werden, und gestattet dabei einen schnellen Wechsel von der einen zu der anderen Einsatzart. Ein zusätzliches Gerät zum Einsatz in der Baumaschine kann entfallen. Hierdurch werden erhebliche Kosten gespart. In beiden Einsatzszenarien werden ferner dieselben geographischen Baustelleninformationen verwendet. Ein entsprechendes Umwandlungsmodul ist daher ebenfalls nicht mehr erforderlich, und die für eine Umwandlung erforderliche Zeit kann ebenfalls entfallen, was wiederum Zeit und Kosten spart.

Überdies wird durch die Verwendung des selben Baustellenvermessungsgeräts zur Baumaschinenführung wie auch zur Vermessung im Zuge eines Roverbetriebs gewährleistet, dass die geografischen Baustelleninformationen in beiden Betriebszuständen dieselben sind. Das bedeutet, dass gewährleistet ist, dass die Informationen, die bei der Baumaschinenführung verwendet werden, mit den Informationen übereinstimmen, welche im Zuge von Aufnahme- und Absteckoperationen im Roverbetrieb ermittelt beziehungsweise verwendet wurden. Somit liefert das erfindungsgemäße Baustellenvermessungsgerät beim Einsatz in der Baumaschine präzise Führungsvorgaben und spart baubegleitende Vermessungsarbeiten und zeit- und kostenintensive Nachprofilierungen.

Eine weitere erfindungsgemäße Weiterbildung zeichnet sich dadurch aus, dass das Baustellenvermessungsgerät eine Eingabeeinrichtung zur Eingabe, insbesondere zur manuellen Eingabe von Informationen umfasst. Diese erfindungsgemäße Weiterbildung sorgt für einen deutlich erweiterten Einsatzbereich.

Eine erste erfindungsgemäße Weiterbildung ist dadurch gekennzeichnet, dass die geografischen Baustelleninformationen Teil eines Bauplans sind oder eine Soll- oder Istposition eines baustellenrelevanten Merkmals, insbesondere eine Soll- oder Istposition eines Bauwerks, eines Schachts, eines Grabens, einer Böschung, eines Kanals, einer Rohrleitung oder einer elektrischen Leitung umfassen.

Somit können einem Baumaschinenführer über die Ausgabeeinrichtung Informationen bezüglich einer Soll- und Istpostition eines baustellenrelevanten Merkmals vorgegeben werden. Hierdurch können beispielsweise einem Baumaschinenführer, beispielsweise einem Baggerfahrer, im Betrieb Warnhinweise gegeben werden, falls er sich mit einem Werkzeug der Baumaschine, beispielsweise einem Baggerwerkzeug, in der Nähe einer Rohrleitung oder einer elektrischen Leitung befindet, und/oder der Baumaschinenführer kann anhand der Informationen seine Baumaschine gezielt zur Erstellung des Bauwerks steuern. Die Sicherheit und Wirtschaftlichkeit im Baustellenbetrieb wird damit erhöht.

Ein weiteres erfindungsgemäßes Merkmal ist dadurch gekennzeichnet, dass die Schnittstelle zur Zuführung von Signalen einer Empfangseinrichtung für Signale eines globalen Satelliten-Navigationssystems mit Differenzialsignal, eines Lage- und/oder Gelenksensors eines Baumaschinenauslegers, ein Lage- und/oder Gelenksensors eines Baumaschinenwerkzeugs, eines Neigungssensor eines Gelenks einer Baumaschine, und/oder einer Datenverarbeitungsanlage der Baumaschine ausgebildet ist. Der Vorteil einer solchen Schnittstelle besteht darin, dass dem Baustellenvermessungsgerät für die Steuerung der Baumaschine besonders relevante Informationen zugeführt werden können. Hierdurch ist eine besonders genaue Steuerung und Kontrolle der mit der Baumaschine durchgeführten Arbeiten möglich. So kann beispielsweise auch ein Abweichen von geplanten Baumaßnahmen schnell erkannt werden. Ebenso können dem Führer der Baumaschine situationsangepasste Ausgaben ausgegeben werden.

Eine weitere erfindungsgemäße Fortbildung besteht darin, dass das Baustellenvermessungsgerät ein Verarbeitungsmodul umfasst, das, wenn das Baustellenvermessungsgerät über die Schnittstelle mit einer baumaschinenseitigen Einrichtung verbunden ist, an der Ausgabeeinrichtung, insbesondere abhängig von einer aktuellen Position eines Baumaschinenwerkzeugs und von abgespeicherten geografischen Baustelleninformationen, Handlungsanweisungen an einen Baumaschinenführer zur Ausgabe bringt. Damit wird die Steuerung der Baumaschine nochmals vereinfacht, die Arbeit mit der Baumaschine beschleunigt, und die Qualität der mit der Baumaschine durchgeführten Arbeiten verbessert. Auch die Sicherheit im Betrieb der Baumaschine wird verbessert, da der Baumaschinenführer den Anweisungen des Baustellenvermessungsgeräts folgen und daher seine Konzentration beispielsweise auf das Vermeiden von Unfällen richten kann.

Ebenso vorteilhaft ist, dass durch die genaue Führung des Baumaschinenführers über das Baustellenvermessungsgerät menschliche Fehler reduziert oder eliminiert werden. Des Weiteren wird es überflüssig, dass der Baumaschinenführer sich mit geplanten Baumaßnahmen intensiv auseinandersetzt, sondern er kann direkt den Handlungsanweisungen des Baustellenvermessungsgeräts folgen. Dies wirkt sich unter anderem positiv auf die durch eine Baumaßnahme entstehenden Kosten aus.

Durch die Verwendung des selben Geräts zur Baustellenvermessung wie auch zur Ausgabe von Anweisungen an den Baumaschinenführer entfällt die Notwendigkeit eines zusätzlichen Geräts zur Baumaschinenführung. Wie bereits oben erwähnt, entfällt auch die Notwendigkeit einer Synchronisation der Daten auf einem solchen zusätzlichen Gerät, was mitunter aufwändig sein kann.

Erfindungsgemäß ist ebenso, dass das Baustellenvermessungsgerät ein Verarbeitungsmodul umfasst, das, wenn das Baustellenvermessungsgerät nicht über die Schnittstelle mit der baumaschinenseitigen Einrichtung verbunden ist, an der Ausgabeeinrichtung, insbesondere abhängig von einer aktuellen Position eines Referenzelements, vorzugsweise eines Vermessungslotstabs, einer Antenne oder eines Stativs, Handlungsanweisungen an einen Bediener des Rovers zur Ausgabe bringt. Das erfindungsgemäße Gerät erkennt somit automatisch das aktuelle Betriebsszenario (entweder mobiler Roverbetrieb oder stationärer Baumaschinenbetrieb) und gibt abhängig hiervon auf das erkannte Betriebsszenario angepasste Handlungsanweisungen aus. Dies erhöht die Einsatzflexibilität und verringert Verzögerungen bei der Umstellung von einem auf das andere Betriebsszenario.

Die eingebbaren Informationen sind im Sinne der Erfindung auch eine Auswahl des Typs einer Baumaschine, eine Absteck- oder Aufnahme-Information, eine Auswahl einer Baustelleninformation, ein Teil einer Baustelleninformation, eine Kalibrierung, ein Offset, ein Layer, eine Darstellungsart, ein Referenzpunkt eines Werkzeugs oder ein Werkzeugtyp. Hierdurch wird möglich, dass zum Beispiel der Baumaschinenführer nicht-markierte Rohrleitungen in die im Baustellenvermessungsgerät gespeicherte geographische Baustelleninformation, üblicherweise den Bauplan, eingeben kann. Ebenso lassen sich hierdurch auf dem Baugrundstück befindliche Merkmale in die im Baustellenvermessungsgerät gespeicherten Datensätze eingeben. Vorstellbar ist beispielsweise die Eingabe der Lage von Bäumen oder von bautechnisch in sonstiger Weise relevanten Merkmalen in die im Baustellenvermessungsgerät enthaltenen Datensätze.

Durch die Spezifizierung beispielsweise eines Werkzeugtyps lässt sich die Genauigkeit der an den Baumaschinenführer ausgegebenen Handlungsanweisungen erhöhen. Durch die Auswahl einer geeigneten Darstellungsart lässt sich der Betrieb des Baustellenvermessungsgeräts an jeweilige Betriebsbedingungen und an die individuellen Wünsche des Benutzers optimal anpassen.

Erfindungsgemäß ist ebenso, dass die Eingabeeinrichtung einen Touchscreen, eine Spracherkennung, eine Tastatur oder eine Eingabeschnittstelle umfasst. Eine Spracherkennung ermöglicht eine Dateneingabe per Spracheingabe und hat den Vorteil, dass kein Handeinsatz zur Eingabe erforderlich ist. Dies entlastet den Benutzer, so dass er andere Tätigkeiten wahrnehmen und/oder sich auf andere Tätigkeiten konzentrieren kann. Eine Tastatur ist robust und auch unter widrigen Bedingungen wie Lärm oder Regen zu bedienen. Ein Touchscreen eliminiert die Notwendigkeit für eine externe Tastatur, so dass das Gerät aus einem Block gefertigt werden kann, und gestattet eine intuitive und situative Bedienung. Möglich ist sogar der Einsatz eines klassischen Tablet-PCs, auf den das Programm zum Abstecken, Aufnehmen, Führen der Baumaschine und Kalibrieren als App geladen wird. Die mechanische Störanfälligkeit von Tastaturelementen wird überdies durch einen Touchscreen eliminiert. Eine allgemeine Eingabeschnittstelle, beispielsweise unter Verwendung eines üblichen Datenprotokolls, gestattet die Dateneingabe auch noch über andere Sensoren, beispielsweise Schalter oder über externe Drittgeräte.

Gemäß einer weiteren erfindungsgemäßen Fortbildung ist der Anschluss zum Anschließen einer Empfangseinrichtung für Signale eines globalen Satelliten-Navigationssystems mit Differenzialsignal ausgebildet. Die Verwendung eines globalen Satelliten-Navigationssystems mit Differenzialsignal zur Bestimmung von Positionen hat den Vorteil, dass eine sehr hohe Genauigkeit gewährleistet ist. Die Genauigkeit eines solchen Systems bewegt sich im Zentimeterbereich. Des Weiteren ist das Baustellenvermessungsgerät global einsetzbar, da Signale eines solchen globalen Satelliten-Navigationssystems mit Differentialsignal praktisch weltweit empfangen werden können. Hierbei kann es sich beispielsweise um das kommerziell häufig verwendete GPS-NAVSTAR Signal handeln. Ebenso denkbar ist aber auch die Verwendung anderer Navigationssatellitensysteme wie beispielsweise dem geplanten europäischen Galileo-System oder dem russischen GLONASS-System.

Wie eingangs ausgeführt wurde, umfasst die Baustellenvermessung auch das Kalibrieren einer Empfangseinrichtung. Dabei spielt eine Rolle, dass übliche Geräte zur Erzeugung von Handlungsanweisungen an einen Baumaschinenführer ein eigenes erstes Koordinatensystem - nachfolgende "Empfangseinrichtungs-Koordinatensystem" genannt - verwenden, welches sich von einem zweiten Koordinatensystem der Baustelle - nachfolgend "Baustellen-Koordinatensystem genannt - unterscheidet. Dies macht eine Ermittlung eines Zusammenhangs zwischen diesen beiden Koordinatensystemen erforderlich. Bisher wird hierfür speziell geschultes Fachpersonal eingesetzt, was aber insbesondere bei kleinen Bauvorhaben die Wirtschaftlichkeit des Bauvorhabens stark beeinflussen kann.

Stärker im Detail geht es dabei um Folgendes: Zur Positionsbestimmung geeignete Signale (meist elektromagnetische Signale), die mittels einer Empfangseinrichtung empfangen wurden, erlauben ein Ermitteln einer Positionsangabe, welche dann in dem (ersten) Empfangseinrichtungs-Koordinatensystem angegeben ist. Beispielsweise sind damit die Signale eines Satelliten-Navigationssystems mit Differential Signal wie dem GPS-NAVSTAR System gemeint: Bei diesem liegen die Positionsangaben in einem sog. WGS84 Koordinatensystem vor.

Eine auf einer Baustelle verwendete geographische Baustelleninformation, üblicherweise der Bauplan, ist jedoch in einem anderen, oft baustellenspezifischen Koordinatensystem angegeben, nämlich meist in einem Kartesischen Koordinatensystem. Möglich ist aber auch die Verwendung eines staatlich vermessenen Koordinatennetzes, welches mithilfe von amtlichen Festpunkten integriert werden kann. Das für eine geografische Baustelleninformation verwendete derartige Koordinatensystem ist das (zweite) "Baustellen-Koordinatensystem".

Das oben erwähnte Kalibrieren dient der Ermittlung eines Zusammenhangs zwischen diesen beiden Koordinatensystemen, also zwischen dem Empfangseinrichtungs-Koordinatensystem und dem Baustellen-Koordinatensystem. Erst nach einer solchen Kalibrierung kann das Gerät zur Erzeugung von Handlungsanweisungen an einen Baumaschinenführer verwendet werden. Dieser Zusammenhang ist üblicherweise eine mathematische Transformationsvorschrift, beispielsweise eine Helmert-Transformation. Bei dem Positionserfassungssystem kann es sich im Sinne der Erfindung aber auch um ein erdgebundenes System unter Verwendung von solcher Strahlung handeln, die zur Positionsbestimmung geeignet ist. Hierzu gehört in erster Linie elektromagnetische Strahlung, beispielsweise Funkwellen, denkbar ist aber auch der Einsatz von Schallwellen, insbesondere Ultraschallstrahlung.

Die besagte Kalibrierung erfolgt prinzipiell folgendermaßen: An mehreren Punkten werden im Baustellen-Koordinatensystem die Koordinaten im Empfangseinrichtungs-Koordinatensystem ermittelt. Dies geschieht durch Positionierung der Empfangseinrichtung an einer definierten Position im Baustellen-Koordinatensystem und dem Empfang von zur Positionsbestimmung geeigneten Signalen mittels der Empfangseinrichtung und der Umwandlung dieser Signale in Koordinaten im Empfangseinrichtungs-Koordinatensystem. Dadurch liegen die Koordinaten der definierten Position sowohl im Baustellen-Koordinatensystem als auch im Empfangseinrichtungs-Koordinatensystem vor. Anhand solcher Punkte, deren Koordinaten in beiden Koordinatensystemen bekannt sind, lässt sich dann ein Zusammenhang zwischen den Koordinatensystemen ermitteln. Mit einem solchen Zusammenhang lassen sich dann die über die Empfangseinrichtung im Empfangseinrichtungs-Koordinatensystem ermittelten Koordinaten direkt in Koordinaten im Baustellen-Koordinatensystem umwandeln. Daher kann dann die Position der Empfangseinrichtung und damit verbundener Einrichtungen direkt im Baustellen-Koordinatensystem ermittelt und angeben werden.

Beschrieben wird auch ein Gerät, welches den Vorteil hat, dass eine Kalibrierung eines ersten Koordinatensystems mit einem zweiten Koordinatensystem mithilfe der Baumaschine, insbesondere mithilfe eines Baggers, ermöglicht wird, und zwar weitgehend automatisch und sehr schnell und somit kostengünstig. Damit eignet sich das Gerät auch beim Einsatz auf kleineren Bauvorhaben. Die Genauigkeit ist dabei für viele Fälle vollkommen ausreichend.

Ein solches Gerät umfasst ein Verarbeitungsmodul, das basierend auf den gespeicherten und einander zugeordneten Koordinaten in dem ersten und dem zweiten Koordinatensystem einen Zusammenhang zwischen Koordinaten in dem ersten und dem zweiten Koordinatensystem ermittelt.

Die Ermittlung eines solchen Zusammenhangs bietet den Vorteil, dass gemessene Positionen einer baumaschinenseitigen Empfangseinrichtung direkt in Baustellenkoordinaten transformiert werden können. Dies kann beispielsweise mittels einer Sieben-Parameter-Transformationen (Helmert-Transformation) geschehen. Auch andere Zusammenhänge können ermittelt werden, die eine solche Transformation zwischen den beiden Koordinatensystemen ermöglichen. Die Verfügbarkeit von Positionsdaten der Baumaschine, beziehungsweise eines Baumaschinenwerkzeugs, insbesondere eines Baggerwerkzeugs, typischerweise eines Baggerlöffels, ermöglicht einen kontinuierlichen Abgleich dieser Baumaschinenposition oder Baumaschinenwerkzeugsposition mit Daten aus einer geographischen Baustelleninformation, beispielsweise einem Bauplan.

Das Gerät kann eine Eingabeeinrichtung aufweisen, welche zur Veranlassung der Zuordnung und Abspeicherung durch das Verarbeitungsmodul ausgebildet ist, hat den Vorteil, dass der Baumaschinenführer individuell auswählen kann, an welchen Referenzpunkten er eine Kalibrierung wünscht. Beispielsweise können amtliche Vermessungspunkte berücksichtigt werden. Ebenso denkbar ist die Verwendung von markanten Merkmalen oder bautechnisch relevanten Gegenständen wie beispielsweise eines Hydranten, einer Stromleitung oder eines Wasseranschlusses. Hierdurch wird dem Baumaschinenführer eine maximale Freiheit bezüglich der Punktauswahl oder Linienauswahl gewährt.

Bei dem Gerät kann die Schnittstelle zur Zuführung von Signalen einer Antenne oder einer Empfangseinheit für Signale eines Satelliten-Positionssystems mit Differentialsignal ausgebildet sein. Hierdurch wird eine hohe Genauigkeit erreicht.

Das Gerät kann ein Verarbeitungsmodul umfassen, welches die Koordinaten des Baumaschinenwerkzeugs im zweiten Koordinatensystem mittels der von der Empfangseinrichtung für zur Positionsbestimmung geeignete Signale empfangenen Signale und mittels des ermittelten Zusammenhangs und mittels Signalen von Gelenkssensoren der Baumaschine ermittelt. Die Berücksichtigung eines Satellitennavigationssignals in Kombination mit Signalen von Gelenksensoren der Baumaschine, insbesondere eines Baggers, ermöglicht eine besonders genaue Feststellung der momentanen Position des Baumaschinenwerkzeugs. Die Zuordnung von Koordinaten im ersten Koordinatensystem zu entsprechenden Koordinaten im zweiten Koordinatensystem wird dadurch mit hoher Genauigkeit gewährleistet. Die Verwendung von Gelenksensoren zur Ermittlung der Position des Baumaschinenwerkzeugs erlaubt es außerdem, eine Antenne oder mehrere Antennen der Empfangseinrichtung entfernt vom eigentlichen Baumaschinenwerkzeug zu platzieren. Dies hat den Vorteil, dass die Antenne der Empfangseinrichtung dann keinen schädigenden Einflüssen ausgesetzt ist. Hierdurch wird ein störungsfreier Ablauf der Bauarbeiten gewährleistet.

Nachfolgend wird die Erfindung anhand der beiliegenden Zeichnung erläutert. In dieser zeigen:
- Figur 1: eine perspektivische und stark schematisierte Darstellung einer Baustelle mit einer Baumaschine in Form eines Baggers und mit einem Rover mit einem mobilen Baustellenvermessungsgerät;
- Figur 2: eine schematische Seitenansicht des Baggers von Figur 1 mit dem mobilen Baustellenvermessungsgerät von Figur 1;
- Figur 3: eine schematische Seitenansicht des Rovers von Figur 1;
- Figur 4: eine perspektivische Darstellung eines Bereichs des Rovers von Figur 3 mit dem mobilen Baustellenvermessungsgerät;
- Figur 5: eine perspektivische Darstellung des mobilen Baustellenvermessungsgeräts beim stationären Einsatz in dem Bagger gemäß Figur 2;
- Figur 6: eine Darstellung einer ersten Benutzeroberfläche des mobilen Baustellenvermessungsgeräts beim Einsatz gemäß Figur 5;
- Figur 7: eine Darstellung einer zweiten Benutzeroberfläche des mobilen Baustellenvermessungsgeräts beim Einsatz gemäß Figur 5;
- Figur 8: eine Darstellung einer dritten Benutzeroberfläche des mobilen Baustellenvermessungsgeräts beim Einsatz gemäß Figur 5;
- Figur 9: eine Darstellung einer vierten Benutzeroberfläche des mobilen Baustellenvermessungsgeräts beim Einsatz gemäß Figur 5;
- Figur 10: eine Darstellung einer Benutzeroberfläche des mobilen Baustellenvermessungsgeräts beim Einsatz gemäß Figur 4;
- Figur 11: eine Darstellung einer fünften Benutzeroberfläche des mobilen Baustellenvermessungsgeräts beim Einsatz gemäß Figur 5; und
- Figur 12: eine Darstellung einer sechsten Benutzeroberfläche des mobilen Baustellenvermessungsgeräts beim Einsatz gemäß Figur 5.

In den verschiedenen Figuren der Zeichnung sind einander entsprechende Bauteile und Bereiche mit gleichen Bezugszeichen versehen.

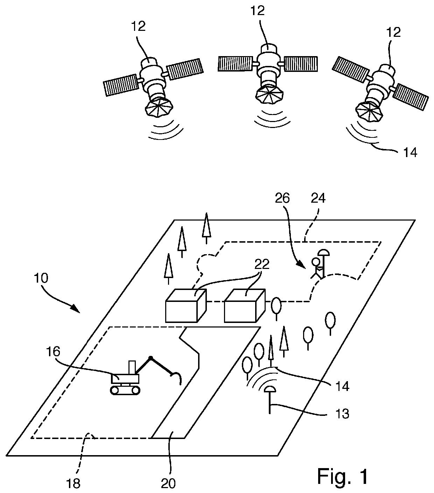

Eine Baustelle trägt in Figur 1 insgesamt das Bezugszeichen 10. Ebenso dargestellt sind in einem nicht maßstabsgetreuen Abstand zur Baustelle Satelliten 12 eines Satellitennavigationssystems, beispielweise das NAVSTAR GPS. Erfindungsgemäß wäre aber auch die Verwendung des Galileo Systems oder des russischen GLONASS. Zur Erhöhung der Genauigkeit dieses Systems wird ein Sender 13 zur Erzeugung eines Differentialsignals verwendet. Die elektromagnetischen Signale der Satelliten sowie das Differentialsignal tragen insgesamt das Bezugszeichen 14. Sie dienen, wie weiter unten noch dargestellt werden wird, in unterschiedlicher Weise zur Positionsbestimmung bei der Bearbeitung der Baustelle 10. Bei einer nicht dargestellten Ausführungsform werden an Stelle eines Satellitennavigationssystems erdgebundene elektromagnetische Signale zur Positionsbestimmung verwendet.

Eine Baumaschine in Form eines Baggers 16 ist auf einem noch auszubaggernden Bereich 18 der Baustelle 10 dargestellt. An den noch auszubaggernden Bereich 18 grenzt ein bereits ausgebaggerter Bereich 20 an. An einem Ende des ausgebaggerten Bereichs 20 sind Gebäude 22 dargestellt. Von dem auszubaggernden Bereich 18 gesehen hinter den Gebäuden 22 ist ein abzusteckender Bereich 24 dargestellt. Entlang der gestrichelten Außenlinien des abzusteckenden Bereichs 24 ist ein sogenannter Rover 26 dargestellt. Bei diesem handelt es sich um ein weiter unten noch näher beschriebenes und im Betrieb durch eine Person über die Baustelle 10 von Hand bewegbares und insoweit "mobiles" Gerät, mit dem Absteckarbeiten ausgeführt werden können.

Ein Bauvorhaben auf der Baustelle 10 läuft üblicherweise wie folgt ab: In einem ersten Schritt wird eine sogenannte Bauvermessung durchgeführt, und zwar meist entweder durch eine Person in Form eines Vermessungstechnikers, eines Geodäten oder eines Bauingenieurs beziehungsweise Bauleiters, der den Rover 26 in der Hand hält und so über die Baustelle bewegt. Da hierzu die Satellitennavigationssignale 14 verwendet werden, ist regelmäßig eine auch als Kalibrierung bezeichnete Transformation der Signale 14 des Satelliten-Navigationssystems, die in einem Empfangseinrichtungs-Koordinatensystem vorliegen, in Koordinaten der Baustelle 10 in einem Baustellen-Koordinatensystem notwendig. Diese Kalibrierung kann ebenfalls mit dem Rover 26 durchgeführt werden, oder mit dem Bagger 16. Dies wird weiter unten noch erläutert werden.

Typischerweise schließt sich an eine solche Kalibrierung ein Absteckvorgang an. Hierbei werden beispielsweise Baufluchtlinien oder Höhenbezüge markiert. Dies kann beispielsweise über Absteckleinen oder Sprühfarbe geschehen. Bei der Errichtung eines Einfamilienhauses würden beispielsweise der Keller und wichtige Gebäudeecken mittels eines Schnurgerüsts abgesteckt. Dieses Abstecken wird durchgeführt, indem eine Person mit dem Rover 26, der ein später noch näher zu erläuterndes Baustellenvermessungsgerät umfasst, welches an eine Empfangseinrichtung für die Signale 14 des Satelliten-Navigationssystems 12 angeschlossen ist, die entsprechenden Punkte auf der Baustelle 10 abgeht und markiert. Der solchermaßen abzusteckende Bereich 24 kann hierbei komplexe Formen aufweisen. Im Anschluss an das Abstecken der Baustelle werden dann die Bagger- bzw. Aushubarbeiten durch den Bagger 16 durchgeführt. Danach erfolgt ein Aufnehmen oder Eintragen der tatsächlich durchgeführten Baumaßnahmen in eine geographische Baustelleninformationen, typischerweise den Bauplan.

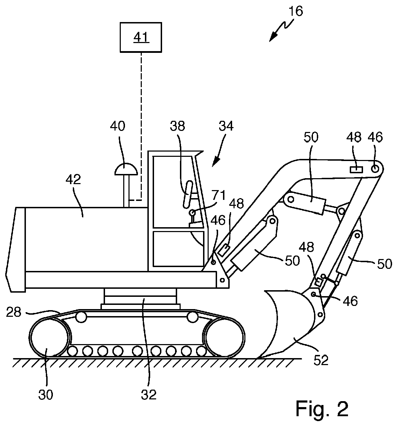

Figur 2 zeigt eine beispielhafte Ausführung eines Baggers 16. Der gezeigte Bagger 16 ist hier als Raupenbagger ausgeführt. Ein Antriebsteil des Baggers 16 umfasst eine Kette 28 sowie Antriebsräder 30. An den Antriebsteil 16, 18 schließt sich ein Rotationsgelenk 32 an, über welches ein Oberteil 34 des Baggers 16 gegenüber dem Antriebsteil 16, 18 rotiert werden kann. Das Oberteil 34 des Baggers 16 umfasst eine Baggerführerkabine 36, welche hier das bereits oben erwähnte mobile Baustellenvermessungsgerät 38 enthält.

Dieses ist mittels einer in dieser Figur noch nicht dargestellten Schnittstelle mit einer GPS-Antenne 40 verbunden, die an einem Motorgehäuse 42 des Baggers 16 angebracht und mit einer Verarbeitungseinrichtung (nicht dargestellt) verbunden ist. Die GPS-Antenne 40 und die Verarbeitungseinrichtung bilden insgesamt eine Empfangseinrichtung zur Positionsbestimmung, die nachfolgend ebenfalls mit 40 bezeichnet werden wird. Sie ist in diesem Beispiel mit einer Datenverarbeitungsanlage 41 des Baggers 16 verbunden. Die Verarbeitungseinrichtung kann auch in die Datenverarbeitungsanlage 41 des Baggers 16 integriert sein. Am Oberteil 34 ist ein Ausleger in Form eines Baggerarms 44 angebracht. Dieser ist im vorliegenden Beispiel mehrgliedrig ausgeführt. Die einzelnen Glieder des Auslegers 44 sind miteinander über Gelenke 46 verbunden, und der Ausleger 44 des Baggers 16 ist über ein Gelenk 46 mit dem Oberteil 34 des Baggers 16 verbunden.

Die Ausrichtung der Gelenke 46 und somit der Glieder des Auslegers 44 lässt sich mittels Hydrauliklinearmotoren in Form von Hydraulikzylindern 50 variieren. Über einen dieser Hydraulikzylinder 50 lässt sich auch die Position eines als Baggerlöffel 52 ausgeführten Baumaschinenwerkzeugs relativ zum Baggerausleger 44 verändern. Die durch die Hydraulikzylinder 50 variierte Relativlage der Glieder des Auslegers 44 kann über Gelenksensoren 48 gemessen und über eine erst weiter unten näher erläuterte Schnittstelle an das Baustellenvermessungsgerät 38 übermittelt werden.

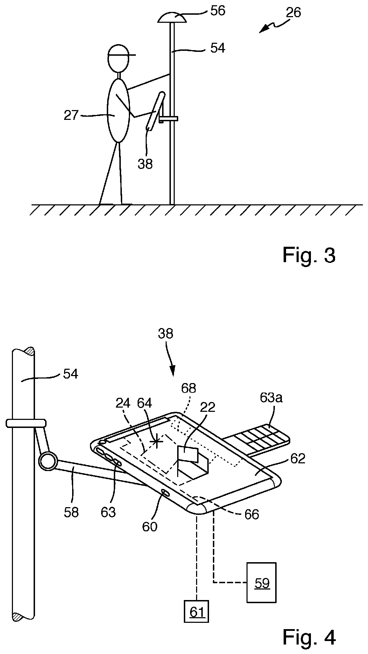

Figur 3 zeigt das mobile Baustellenvermessungsgerät 38 als Teil des Rovers 26, der von einer Person 27 gehalten und über die Baustelle 10 bewegt wird (insoweit ist das Baustellenvermessungsgerät 38 im Betrieb "mobil"). Das Baustellenvermessungsgerät 38 ist hierbei an einem ebenfalls zum Rover 26 gehörenden Lotstab 54 angebracht, welcher über eine DGPS-Antenne mit integrierter DGPS-Empfangseinrichtung 56 verfügt. Die Person 27 kann den Rover 26 im Vermessungsgebetrieb in der Form des senkrecht gehaltenen Lotstabs 54 und der mit ihm verbundenen DGPS-Empfangseinrichtung 56 an verschiedene Vermessungspunkte bewegen. Signale der DGPS-Empfangseinrichtung 56 werden über die bereits oben mehrfach erwähnte, aber erst weiter unten näher bezeichnete Schnittstelle an das Baustellenvermessungsgerät 38 übermittelt.

Die Person 27 kann ausgegebene Anweisungen des Baustellenvermessungsgeräts 38 des Rovers 26 befolgen, um Absteckoperationen durchzuführen. Eine solche Absteckoperation ist beispielsweise das Markieren von unterirdisch verlaufenden Wasserleitungen mittels Sprühfarbe. Ebenso gehört hierzu das Markieren von Fluchtungspunkten der Baustelle 10, sowie das Abstecken von Höhenlinien, die für die Baumaßnahmen auf der Baustelle 10 relevant sind.

Figur 4 zeigt eine Detailansicht des mobilen Baustellenvermessungsgeräts 38 am Lotstab 54. Das mobile Baustellenvermessungsgerät 38 ist über einen Schwenkarm 58 mit dem Lotstab 54 verbunden. In das Baustellenvermessungsgerät 38 ist ein Verarbeitungsmodul 59 integriert, welches hier als Mikroprozessor ausgeführt ist. Das mobile Baustellenvermessungsgerät 38 umfasst die bereits oben mehrfach erwähnte Schnittstelle , welche in Figur 4 das Bezugszeichen 60 trägt und hier als USB-Anschluss ausgeführt ist. In einer nicht dargestellten Ausführungsform ist die Schnittstelle drahtlos, beispielsweise eine Bluetooth-Schnittstelle.

Das Baustellenvermessungsgerät 38 umfasst ferner einen Speicher 61 sowie eine Ausgabeeinrichtung 62. Die Ausgabeeinrichtung 62 ist in diesem Beispiel als berührungsempfindlicher Bildschirm ausgeführt. Auf besagtem Bildschirm sind in Figur 4 dargestellt das Gebäude 22, der abzusteckende Bereich 24, ein Verlauf 66 einer unterirdisch liegenden Wasserleitung und ein Verlauf 68 einer unterirdisch liegenden elektrischen Leitung. Ferner wird auf dem Bildschirm die momentane Position 64 des Lotstabs 54 (eigentlich: der DGPS-Antenne 56) des Rovers 26 angezeigt.

Der berührungssensitive Bildschirm 62 dient auch zur Eingabe von Informationen. Eine weitere Eingabeeinrichtung ist beispielhaft in Form einer Eingabeschnittstelle 63 sowie einer Tastatur 63a dargestellt. Die in diesem Ausführungsbeispiel als berührungssensitiver Bildschirm ausgeführte Ausgabeeinrichtung 62 kann in einem nicht dargestellten Ausführungsbeispiel alternativ oder zusätzlich als Sprachausgabe ausgeführt sein.

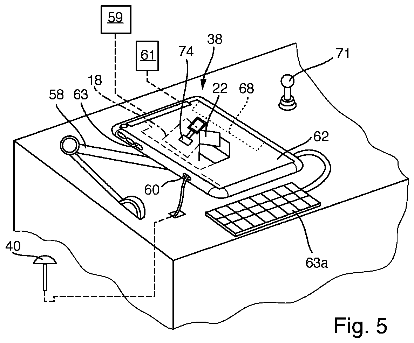

Figur 5 zeigt wiederum das mobile Baustellenvermessungsgerät 38. Es ist in diesem Beispiel jedoch in den Bagger 16 eingesetzt, wie in Figur 2 gezeigt, möglich ist aber ebenso der Einsatz in anderen Baumaschinen, beispielsweise Erdhobeln oder Planierwalzen. Ein Steuerknüppel 71 des Baggers 16 ist neben dem Baustellenvermessungsgerät 38 angebracht. Auf dem Bildschirm 62 des Baustellenvermessungsgeräts 38 ist eine Projektion 74 des Baggerlöffels 52 dargestellt. Ebenso dargestellt ist eine schemenhafte Draufsicht auf den Bagger 16, welche kein Bezugszeichen trägt. Über die Schnittstelle 60 werden dem mobilen Baustellenvermessungsgerät 38 Signale der baumaschinenseitigen Empfangseinrichtung 40 zugeführt.

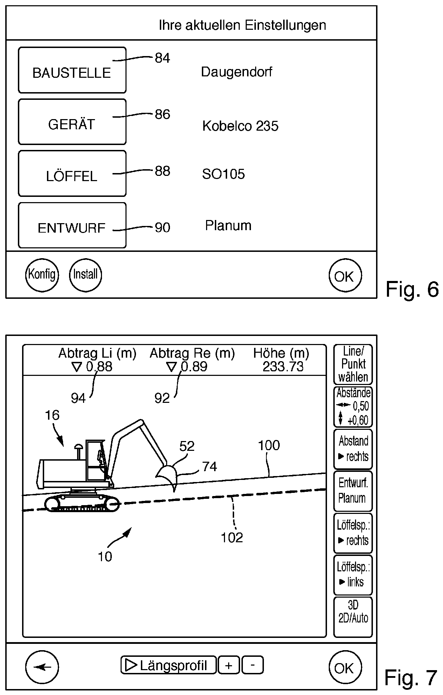

Figur 6 zeigt eine Benutzeroberfläche des Baustellenvermessungsgeräts 38, mit der der Benutzer verschiedene Eingaben machen kann. So wird dem Benutzer im Bereich 84 unter dem Menüpunkt "Baustelle" eine Auswahlmöglichkeit verschiedener Baustellen (und somit der zu diesen gespeicherten Bauplänen) gegeben. Ebenso kann der Benutzer unter dem Menüpunkt "Gerät" in einem Bereich 86 auswählen, mit welchem Gerät das Baustellenvermessungsgerät 38 eingesetzt werden soll. Vorliegend ist als Gerät ein Bagger vom Typ "Kobelco 235" ausgewählt. Möglich ist aber auch, an dieser Stelle den Einsatz des Baustellenvermessungsgeräts 38 als Teil eines Rovers 26 auszuwählen. Ist in 86 eine Baumaschine ausgewählt, kann in einem Bereich 88 das momentan in der Baumaschine verwendete Werkzeug spezifiziert werden, in diesem Beispiel ist ein Löffel 52 des Baggers 16 vom Typ "SO105" ausgewählt. In einem Bereich 90 ermöglicht ein weiterer Menüpunkt die Auswahl eines bestimmten Bauplans. Vorliegend ist der Bauplan "Planum" ausgewählt.

Das Baustellenvermessungsgerät 38 wird im Bagger 16 zur Ausgabe von Handlungsanweisungen an den Baggerführer eingesetzt, damit dieser den Bagger 16 so bedienen kann, dass die Baggerarbeiten schnell und präzise durchgeführt werden. Eine Reihe von möglichen Benutzeroberflächen zur Ausgabe von solchen Handlungsanweisungen ist in den Figuren 7 bis 9 dargestellt.

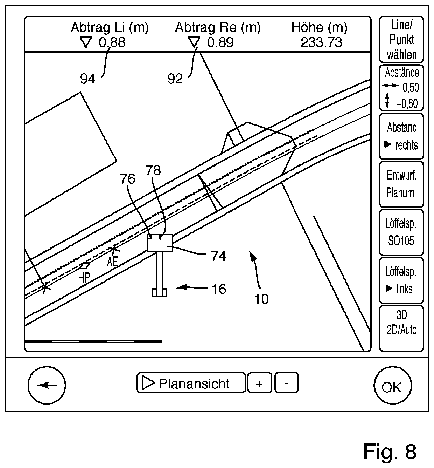

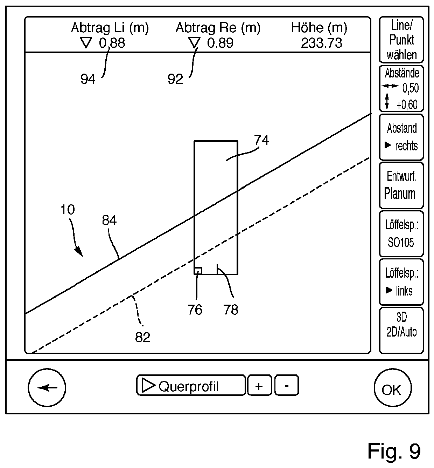

Figur 7 zeigt eine Benutzeroberfläche, bei der der Bagger 16, eine Projektion 74 des Baggerlöffels 52 und die Baustelle 10 in einer Seitenansicht dargestellt sind, Figur 8 eine Benutzeroberfläche, bei der der Bagger 16 teilweise und in einer Ansicht aus der Vogelperspektive und zusätzlich der Bauplan der Baustelle dargestellt sind, sowie Figur 9 eine Benutzeroberfläche, die einer Sicht aus der Baggerführerkabine 34 auf den Löffel 52 und den Bauplan der Baustelle 10 entspricht.

Wie viel der Baggerführer noch an Erdreich abzutragen hat, wird ihm in den Benutzeroberflächen der Figuren 7 bis 9 in den Feldern 92 und 94 angegeben. Beispielsweise im Bereich 92 wird ihm angegeben, wie weit die rechte Spitze des Baggerlöffels 52 momentan noch von einer Solllinie entfernt ist. Im Bereich 94 wird ihm angegeben, wie weit die linke Spitze des Baggerlöffels momentan noch von der Solllinie entfernt ist. Diese Angabe ist dabei jeweils in vertikaler Richtung gesehen, oder in anderen Worten: Es handelt sich um eine vertikale Entfernung. Bei der Solllinie handelt es sich natürlich um eine Sollfläche, die aber in der 2-dimensionalen Darstellung nur als Linie erscheint. In Figur 7 ist eine Solllinie der geplanten Oberfläche einer Straße mit dem Bezugszeichen 100 versehen. Auch dargestellt ist eine Solllinie 102 für den Aushub. Der Baggerfahrer wird in diesem Beispiel also angewiesen, soviel Erdreich abzutragen, bis der Verlauf der Oberfläche des Erdreichs mit der Solllinie 102 übereinstimmt.

Vorgesehen ist auch, dass das Baustellenvermessungsgerät 38 Warnungen ausgibt, falls der Baggerführer den Baggerlöffel 52 zu nahe an zu meidende Punkte heranbringt.

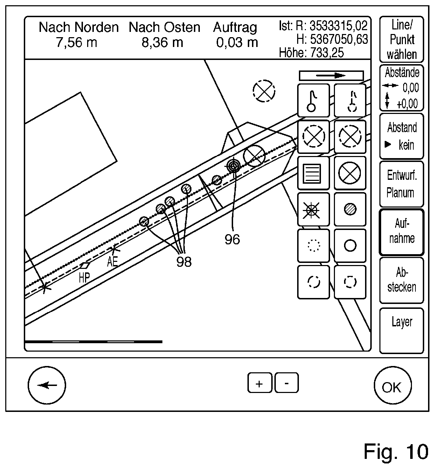

Figur 10 zeigt eine Benutzeroberfläche des Baustellenvermessungsgeräts 38 für den Fall, dass es als Teil eines Rovers 26 benutzt wird und an die ihn benutzende Person 27 entsprechende Anweisungen ausgibt (nach einer entsprechenden Auswahl im Bereich 86 von Figur 6). Die Baustelle wird dabei aus der Vogelperspektive gezeigt. Eine aktuelle Position 96 des Rovers 26 wird ebenso angezeigt wie vom Rover 26 abzugehende Absteckpunkte 98. In ähnlicher, hier nicht dargestellter Weise, können der den Rover 26 benutzenden Person 27 Angaben gemacht werden über aufzunehmende, das heißt zu vermessende Punkte.

Möglich ist auch der Einsatz des Rovers 26 mit dem mobilen Baustellenvermessungsgerät 38 zur bereits eingangs erwähnten Kalibrierung. Unter einer solchen Kalibrierung versteht man dabei, dass der Rover 26 von der Person 27 an bestimmte Punkte in der Baustelle 10 bewegt wird, welche bestimmte Koordinaten in einem Baustellen-Koordinatensystem haben. Diese Markierungspunkte können der Person 27 auf dem Bildschirm 62 angezeigt werden. Hierbei kann es sich beispielsweise um den Verlauf 66 einer Rohrleitung handeln (siehe Figur 4). Ebenso denkbar sind städtische Vermessungspunkte. An jedem Markierungspunkt nimmt der Rover 26 mittels des Baustellenvermessungsgeräts 38 dann die entsprechenden Signale 14 des Satelliten-Navigationssystems auf. Die durch die gemessenen oder aufgenommenen Signale 14 ermittelten Positionen sind in Koordinaten des Empfangseinrichtungs-Koordinatensystems (erstes Koordinatensystem) gegeben und werden dann den Koordinaten in dem Baustellen-Koordinatensystem (zweites Koordinatensystem) zugeordnet.

Typischerweise handelt sich bei dem Baustellen-Koordinatensystem um ein kartesisches Koordinatensystem. Ein Beispiel für ein Koordinatensystem eines Satelliten-Navigationssystems wäre das WGS84 Koordinatensystem. Der Rover 26 wird also zu mehreren Punkten in der Baustelle 10 bewegt, welche bekannte Koordinaten im Baustellen-Koordinatensystem haben, und nimmt dort die Koordinaten in dem Empfangseinrichtungs-Koordinatensystem auf. Die entsprechenden Koordinatenpaare werden einander zugeordnet, das heißt für einen bestimmten Punkt der Baustelle 10 wird die Koordinate im Baustellen-Koordinatensystem der Koordinate im Empfangseinrichtungs-Koordinatensystem zugeordnet.

Anhand dieser Koordinatenpaare lässt sich dann ein Zusammenhang für die Transformation der Koordinaten im Empfangseinrichtungs-Koordinatensystem in solche des Baustellen-Koordinatensystems ermitteln. Ein solcher Zusammenhang oder eine solche Transformationsvorschrift ist beispielsweise die sog. "Helmert-Transformation". Erfindungsgemäß ist aber auch die Ermittlung anderer, beispielsweise einfacherer Zusammenhänge, insbesondere einfacherer mathematischer Transformationen, insbesondere auch solcher, die nur lokal eine Transformation mit genügender Genauigkeit beschreiben.

Durch die eben beschriebene Ermittlung eines Zusammenhangs zwischen einem Empfangseinrichtungs-Koordinatensystem und dem Baustellen-Koordinatensystem wird es ermöglicht, die Signale 14 im Empfangseinrichtungs-Koordinatensystem direkt in Koordinaten des Baustellen-Koordinatensystems umzurechnen beziehungsweise umzuwandeln und entsprechend darzustellen.

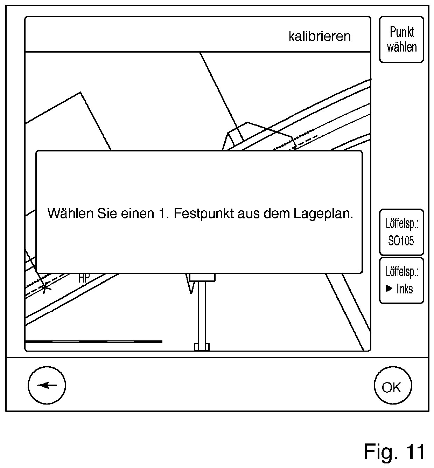

Figur 11 zeigt eine weitere Benutzeroberfläche des Baustellenvermessungsgeräts 38, die dann erscheint, wenn es in dem Bagger 16 eingesetzt wird, um eine Kalibrierung der gerade beschriebenen Art durchzuführen. Möglich ist eine solche Benutzeroberfläche aber auch auf einem anderen, beispielsweise fest und insoweit nicht entfernbaren in dem Bagger 16 installierten Gerät zur Bereitstellung von Informationen, insbesondere zur Erzeugung von Handlungsanweisungen, für einen Baumaschinenführer.

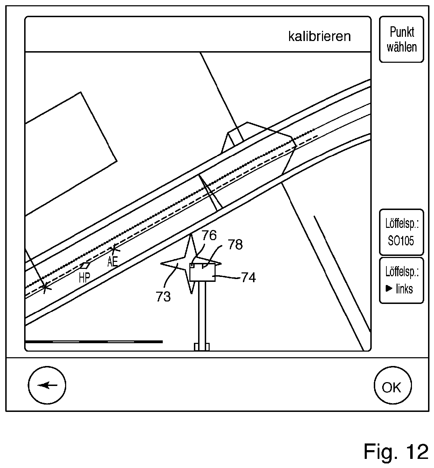

Um eine Kalibrierung durchzuführen, wählt der Baggerführer zunächst einen Menüpunkt "Kalibrieren" aus. Wie aus Figur 11 ersichtlich ist, wird der Baggerführer dann durch ein auf dem Bildschirm 62 erscheinenden Fenster dazu aufgefordert, einen ersten Kalibrierungspunkt aus dem Lageplan auszuwählen. Durch eine entsprechende Eingabe am berührungsempfindlichen Bildschirm 62 wählt der Baggerführer einen Kalibrierungspunkt aus, vorliegend mit dem Bezugszeichen 73 bezeichnet (Figur 12).

Es wird nun ein weiteres Fenster auf dem Bildschirm 62 angezeigt, welches den Baggerführer anweist, den gewählten Eckpunkt des Baggerlöffels 52 genau auf den gewählten Kalibrierungspunkt 73 zu setzen. Mittels einer Projektion 74 des Baggerlöffels 52 aus der Vogelperspektive, ähnlich zu der Darstellung in Figur 8 wird ihm dargestellt, wie er den Baggerlöffel 52 zu platzieren hat, um den Kalibrierungspunkt 73 aufzunehmen. Diese Projektion umfasst auch eine spezielle optische Markierung 76 des Eckpunkts des Baggerlöffels 52, sowie eine spezielle optische Markierung 78 des Verlaufs der Mittellinie des Baggerlöffels 52.

Der Baggerführer bringt nun die Position seines Löffels 52 so an den von ihm markierten Kalibrierungspunkt 73, wie es in den Figur 12 dargestellt ist. Auf eine Eingabe des Baggerführers hin nimmt das Baustellenvermessungsgerät 38 die von der Empfangseinrichtung 40 empfangenen Signale 14 des Satelliten-Navigationssystems mit Differentialsignal 12,13 auf und weist diese den Koordinaten in dem Baustellen-Koordinatensystem zu. Basierend auf diesen Signalen 14 wird dabei die Position des Eckpunkts 76 des Baggerlöffels 52 in einem Empfangseinrichtungs-Koordinatensystem ermittelt. Dies kann beispielsweise unter Einbeziehung von Signalen der Gelenksensoren 48 und Daten über die bauliche Auslegung des Baggers 16 geschehen. Die im Empfangseinrichtungs-Koordinatensystem vorliegende Position des Eckpunkts 76 des Baggerlöffels 52 wird daraufhin dem Kalibrierungspunkt 73 im Baustellen-Koordinatensystem zugeordnet.

Dieser Vorgang wird vorzugsweise für mehrere verschiedene Kalibrierungspunkte wiederholt. Unter Berücksichtigung der DGPS-Koordinaten, die dem Empfangseinrichtungs-Koordinatensystem zugewiesen sind, kann ein Verarbeitungsmodul des Baustellenvermessungsgeräts 38 daraufhin einen entsprechenden Zusammenhang zwischen dem Empfangseinrichtungs-Koordinatensystem und einem Baustellen-Koordinatensystem ermitteln. Anschließend öffnet ein Fenster auf dem Bildschirm 62, welches dem Baggerführer anzeigt, ob eine (vorgewählte) gewünschte Genauigkeit der Kalibrierung erreicht wurde, und es werden numerische Werte für die erreichte vertikale und die horizontale Genauigkeit ausgegeben.

Basierend auf diesem Zusammenhang zwischen den zwei Koordinatensystemen können dann Koordinaten von Positionen im Empfangseinrichtungs-Koordinatensystem umgewandelt werden in Koordinaten dieser Positionen im Baustellen-Koordinatensystem. Die Position des Baggerlöffels 52 kann dann fortlaufend im auf dem Baustellen-Koordinatensystem basierenden Bauplan angezeigt werden. Anders ausgedrückt, hierdurch lässt sich die Position beispielsweise des Baggers 16 oder des Baggerlöffels 52 direkt in einem beispielsweise als CAD-Plan ausgeführten Bauplan darstellen.

## Patentansprüche

1. Mobiles Baustellenvermessungsgerät (38) mit einem Anschluss für eine Empfangseinrichtung (40, 56) zur Positionsbestimmung mittels zur Positionsbestimmung geeigneter Signale (14), einem Speicher (61) zum Speichern von geografischen Baustelleninformationen, einer Ausgabeeinrichtung (62) zur Ausgabe der geografischen Baustelleninformationen, einer Schnittstelle (60), mit der ihm Signale mindestens einer baumaschinenseitigen Einrichtung (40, 41, 48) zugeführt werden können, und einer Eingabeeinrichtung (62, 63, 63a) zur Eingabe von Informationen, **dadurch gekennzeichnet,**
**dass** die über die Eingabeeinrichtung (62) eingebbare Information eine Auswahl zwischen einem Baumaschinen- und einem Rover-Betrieb umfasst,
wobei das mobile Baustellenvermessungsgerät (38) in dem Baumaschinenbetrieb als stationäres Navigationsgerät in einer Baumaschine (16) einsetzbar ist, und
wobei das mobile Baustellenvermessungsgerät (38) im Rover-Betrieb als mobiles Rovergerät zur Vermessung einsetzbar ist, und
wobei das mobile Baustellenvermessungsgerät (38) sowohl im Baumaschinenbetrieb als auch im Rover-Betrieb dieselben geographischen Baustelleninformationen verwendet.

2. Mobiles Baustellenvermessungsgerät (38) nach Anspruch 1, **gekennzeichnet dadurch, dass** die geografischen Baustelleninformationen Teil eines Bauplans sind oder eine Soll- oder Ist-Position eines baustellenrelevanten Merkmals (22, 66), insbesondere eine Soll- oder Ist-Position eines Bauwerks (22), eines Schachts, eines Grabens, einer Böschung, eines Kanals, einer Rohrleitung (66) oder einer elektrischen Leitung (68) umfassen.

3. Mobiles Baustellenvermessungsgerät (38) nach einem der vorangegangenen Ansprüche, **gekennzeichnet dadurch, dass** die Schnittstelle zur Zuführung von Signalen einer Empfangseinrichtung (40) für Signale (14) eines globalen Satelliten-Positionssystems mit Differentialsignal (12, 13), eines Lage- und/oder Gelenksensors eines Baumaschinenauslegers (44), eines Lage- und/oder Gelenksensors eines Baumaschinenwerkzeugs (52), eines Neigungssensor (48) eines Gelenks (46) der Baumaschine (16), und/oder einer Datenverarbeitungsanlage (41) der Baumaschine (16) ausgebildet ist.

4. Mobiles Baustellenvermessungsgerät (38) nach einem der vorangegangenen Ansprüche, **gekennzeichnet dadurch, dass** es ein Verarbeitungsmodul (59) umfasst, das dann, wenn das Baustellenvermessungsgerät (38) über die Schnittstelle (60) mit einer baumaschinenseitigen Einrichtung (40, 41, 48) verbunden ist, Handlungsanweisungen an einen Baumaschinenführer an der Ausgabeeinrichtung (62) zur Ausgabe bringt.

5. Mobiles Baustellenvermessungsgerät (38) nach wenigstens einem der vorhergehenden Ansprüche, **gekennzeichnet dadurch, dass** die über die Eingabeeinrichtung (62) eingebbare Information mindestens eine ist aus der folgenden Gruppe: ein Typ einer Baumaschine (16), eine Absteck- oder Aufnahme-Information, eine Auswahl einer Baustelleninformation, ein Teil einer Baustelleninformation, eine Kalibrierung, ein Offset, ein Layer, eine Darstellungsart, ein Referenzpunkt eines Baumaschinewerkzeugs (52), ein Werkzeugtyp.

6. Mobiles Baustellenvermessungsgerät (38) nach wenigstens einem der vorhergehenden Ansprüche, **gekennzeichnet dadurch, dass** die Eingabeeinrichtung (62) einen Touchscreen (62), eine Spracherkennung, eine Tastatur (63a) oder eine Eingabeschnittstelle (63) umfasst.

7. Mobiles Baustellenvermessungsgerät (38) nach einem der vorangegangenen Ansprüche, **gekennzeichnet dadurch, dass** der Anschluss zum Anschließen einer Empfangseinrichtung (40) für Signale (14) eines globalen Satelliten-Navigationssystems (12) mit Differentialsignal (13) ausgebildet ist.

## Claims

1. Mobile construction site surveying apparatus (38) having a connection for a receiving device (40, 56) for determining the position by means of signals (14) suitable for position determination, a memory (61) for storing geographical construction site information, an output device (62) for outputting the geographical construction site information, an interface (60) by means of which signals from at least one construction machine-side device (40, 41, 48) can be fed to the device, and an input device (62, 63, 63a) for inputting information, **characterized in**
**that** the information that can be input via the input device (62) comprises a selection between construction machine operation and rover operation,
wherein the mobile construction site surveying apparatus (38) can be used during construction machine operation as a stationary navigation device in a construction machine (16), and
wherein the mobile construction site surveying apparatus (38) can be used during rover mode as a mobile rover apparatus for surveying, and
wherein the mobile construction site surveying apparatus (38) uses the same geographical construction site information both during construction machine operation and during rover operation.

2. Mobile construction site surveying apparatus (38) according to claim 1, **characterized in that** the geographical construction site information is part of a construction plan or comprises a target or actual position of a feature relevant to the construction site (22, 66), in particular a target or actual position of a structure (22), a shaft, a trench, an embankment, a channel, a pipeline (66) or a power line (68).

3. Mobile construction site surveying apparatus (38) according to either of the preceding claims, **characterized in that** the interface is designed to supply signals from a receiving device (40) for signals (14) of a global satellite positioning system having a differential signal (12, 13), of a position and/or joint sensor of a construction machine boom (44), of a position and/or joint sensor of a construction machine tool (52), of an inclination sensor (48) of a joint (46) of the construction machine (16), and/or of a data processing system (41) of the construction machine (16).

4. Mobile construction site surveying apparatus (38) according to any of the preceding claims, **characterized in that** it comprises a processing module (59) which, when the construction site surveying apparatus (38) is connected to a construction machine-side device (40, 41, 48) via the interface (60), outputs handling instructions to a construction machine operator at the output device (62).

5. Mobile construction site surveying apparatus (38) according to at least one of the preceding claims, **characterized in that** the information that can be input via the input device (62) is at least information from the following group: a type of construction machine (16), setting-out or recording information, a selection of pieces of construction site information, a part of the construction site information, a calibration, an offset, a layer, a representation type, a reference point of a construction machine tool (52), a tool type.

6. Mobile construction site surveying apparatus (38) according to at least one of the preceding claims, **characterized in that** the input device (62) comprises a touchscreen (62), a voice recognition means, a keyboard (63a) or an input interface (63).

7. Mobile construction site surveying apparatus (38) according to any of the preceding claims, **characterized in that** the connection is designed for connecting a receiving device (40) for signals (14) of a global satellite navigation system (12) having a differential signal (13).

## Revendications

1. Appareil mobile de mesure de chantier (38) avec un raccord pour un dispositif de réception (40, 56) pour déterminer la position au moyen de signaux (14) adaptés pour la détermination de la position, une mémoire (61) destinée à enregistrer des informations géographiques de chantier, un dispositif de sortie (62) destiné à délivrer en sortie des informations géographiques de chantier, une interface (60), avec laquelle des signaux d'au moins un dispositif côté engin de chantier (40, 41, 48) peuvent lui être amenés, et un dispositif d'entrée (62, 63, 63a) destiné à saisir des informations, **caractérisé en ce**
**que** l'information pouvant être saisie par l'intermédiaire du dispositif d'entrée (62) comprend une sélection entre un mode engin de chantier et un mode engin autonome,
dans lequel l'appareil mobile de mesure de chantier (38) peut être employé en mode engin de chantier comme appareil de navigation fixe dans un engin de chantier (16), et
dans lequel l'appareil mobile de mesure de chantier (38) peut être employé en mode engin autonome en tant qu'appareil mobile d'engin autonome, et
dans lequel l'appareil mobile de mesure de chantier (38) utilise les mêmes informations géographiques de chantier à la fois en engin de chantier et en mode engin autonome.

2. Appareil mobile de mesure de chantier (38) selon la revendication 1, **caractérisé en ce que** les informations géographiques de chantier font partie d'un plan de construction ou comprennent une position théorique ou réelle d'une caractéristique pertinente pour le chantier (22, 66), en particulier une position théorique ou réelle d'un ouvrage (22), d'un puits, d'une tranchée, d'une pente, d'un canal, d'une canalisation (66) ou d'un câble électrique (68).

3. Appareil mobile de mesure de chantier (38) selon l'une quelconque des revendications précédentes, **caractérisé en ce que** l'interface est réalisée pour amener des signaux d'un dispositif de réception (40) pour des signaux (14) d'un système de positionnement par satellite global à signal différentiel (12, 13), d'un capteur de position et/ou d'articulation d'une flèche d'engin de chantier (44), d'un capteur de position et/ou d'articulation d'un outil d'engin de chantier (52), d'un capteur d'inclinaison (48) d'une articulation (46) de l'engin de chantier (16), et/ou d'une installation de traitement de données (41) de l'engin de chantier (16).

4. Appareil mobile de mesure de chantier (38) selon l'une quelconque des revendications précédentes, **caractérisé en ce qu'**il comprend un module de traitement (59) qui, lorsque l'appareil de mesure de chantier (38) est relié par l'intermédiaire de l'interface (60) à un dispositif côté engin de chantier (40, 41, 48), délivre des instructions d'action à un conducteur d'engin de chantier sur le dispositif de sortie (62).

5. Appareil mobile de mesure de chantier (38) selon au moins l'une quelconque des revendications précédentes, **caractérisé en ce que** l'information pouvant être saisie par l'intermédiaire du dispositif d'entrée (62) est au moins une information issue du groupe suivant : un type d'engin de chantier (16), une information de traçage ou de prise, une sélection d'une information de chantier, une partie d'une information de chantier, un calibrage, un décalage, un calque, un type de représentation, un point de référence d'un outil d'engin de chantier (52), un type d'outil.

6. Appareil mobile de mesure de chantier (38) selon au moins l'une quelconque des revendications précédentes, **caractérisé en ce que** le dispositif de saisie (62) comprend un écran tactile (62), une reconnaissance vocale, un clavier (63a) ou une interface de saisie (63).

7. Appareil mobile de mesure de chantier (38) selon l'une quelconque des revendications précédentes, **caractérisé en ce que** le raccord est réalisé pour le raccordement d'un dispositif de réception (40) pour des signaux (14) d'un système global de navigation par satellite (12) avec un signal différentiel (13).
